# EUROPÄISCHE PATENTSCHRIFT

(11) **EP 3 887 084 B1**
(45) Veröffentlichungstag und Bekanntmachung des Hinweises auf die Patenterteilung: **16.03.2022**
(21) Anmeldenummer: 19805151.8
(22) Anmeldetag: 07.11.2019
(51) Int. Cl.: B23G 5/20

(54) **GEWINDEBOHR-WERKZEUG UND VERFAHREN ZUR ERZEUGUNG EINER GEWINDEBOHRUNG**
TAPPING TOOL AND METHOD FOR PRODUCING A TAPPED HOLE
OUTIL DE TARAUDAGE ET PROCÉDÉ DE PRODUCTION D'UN TROU TARAUDÉ

(30) Priorität: 28.11.2018 DE 102018220397
(43) Veröffentlichungstag der Anmeldung: 06.10.2021
(73) Patentinhaber: Audi AG, 85045 Ingolstadt (DE)
(72) Erfinder: KOPTON, Peter, 85092 Kösching (DE)
(86) Internationale Anmeldenummer: PCT/EP2019/080456
(87) Internationale Veröffentlichungsnummer: WO 2020/108938

(56) Entgegenhaltungen:
- WO-A1-2018/028810
- DE-A1-102016 008 478
- US-A- 4 271 554

## Beschreibung

Die Erfindung betrifft ein Gewindebohr-Werkzeug nach dem Oberbegriff des Anspruches 1 sowie ein Verfahren zur Erzeugung einer Gewindebohrung, insbesondere ein Gewindesackloch, nach dem Anspruch 12.

In einem sogenannten Einschuss-Gewindebohr-Prozess wird mit einem Einschuss-Gewindebohr-Werkzeug sowohl eine Vorbohrung (das heißt Kernbohrung) als auch eine Innengewinde-Formen in einem gemeinsamen Werkzeughub durchgeführt. Das Einschuss-Gewindebohr-Werkzeug weist an seiner Bohrerspitze eine Vorbohr-Schneide und einen in einer Gewindebohr-Richtung nacheilenden Gewindeformabschnitt mit zumindest einem Formzahn auf. In dem Verfahren erfolgen zunächst ein Gewindebohr-Hub und anschließend ein dazu gegenläufiger Reversier-Hub. Im Gewindebohr-Hub erzeugt einerseits die Vorbohr-Schneide des Werkzeugs die Vorbohrung und andererseits das Gewindeformprofil das Innengewinde an der Innenwandung der Vorbohrung, und zwar bis zum Erreichen einer nutzbaren Soll-Gewindetiefe. Hierzu wird im Gewindebohr-Hub das Gewindebohr-Werkzeug bei einem Gewindebohr-Vorschub mit dazu synchronisierter Gewindebohr-Drehzahl betrieben. Im nachfolgenden gegenläufigen Reversier-Hub wird das Gewindebohr-Werkzeug in einer Reversier-Richtung aus der Gewindebohrung herausgeführt, und zwar mit entgegengesetztem Reversier-Vorschub sowie dazu synchronisierter Reversier-Drehzahl. Dadurch ist gewährleistet, dass der Formzahn des Gewindeformabschnittes im Gewindegang des Innengewindes belastungsfrei aus der Gewindebohrung bewegt wird.

Bei Verwendung eines gattungsgemäßen Gewindebohr-Werkzeugs erfolgt im Gewindebohr-Hub mit Hilfe des Gewindeformabschnittes eine spanlose Gewindeformung. Im Gewindebohr-Hub entstehen daher nur bei der Erzeugung der Vorbohrung Späne, nicht jedoch bei der Gewindeformung, wodurch ein störungsfreier Späne-Abtransport wesentlich vereinfacht ist. Im spanlosen Gewindeform-Prozess können sich aufgrund der plastischen Verformung des Werkstück-Materials Fehlerstellen bzw. Materialschwächungen im geformten Innengewinde bilden. Diese treten insbesondere am radial inneren Gewindescheitel des Innengewindes auf und beeinträchtigen das Setzverhalten eines in das Innengewinde verschraubten Schraubelementes.

Aus der DE 38 80 394 T2 ist ein Kombinations-Werkzeug zum Bohren eines Loches und zum Gewindeschneiden bekannt. Mit dem Kombinations-Werkzeug wird zunächst eine Kernlochbohrung erzeugt. Anschließend wird das Gewindebohr-Werkzeug mit seiner Werkzeugachse in einer Kreisbohrung um die Bohrungsachse bewegt, und zwar unter Rotation des Gewindebohr-Werkzeugs, wodurch das Innengewinde in der Kernlochbohrung gebildet wird.

Die US 4 271 554 A1 offenbart Gewindebohr-Werkzeug zur Erzeugung einer Werkstück-Gewindebohrung, gemäß dem Oberbegriff des Anspruchs 1, dessen Innengewinde einen Gewinde-Außendurchmesser und einen Gewinde-Kerndurchmesser aufweist, wobei das Gewindebohr-Werkzeug in einem Gewindebohr-Hub in das nicht vorgebohrte Werkstück eintreibbar ist, und in einem Reversier-Hub das Gewindebohr-Werkzeug in einer gegensinnigen Drehbewegung aus der Gewindebohrung herausführbar ist, wobei an einer Bohrerspitze des Gewindebohr-Werkzeugs eine stirnseitige Vorbohr-Schneide zur Erzeugung einer Vorbohrung ausgebildet ist, und wobei an zumindest einem Bohrersteg ein Gewindeformabschnitt mit zumindest, insbesondere genau einem Formzahn ausgebildet ist, mit dem im Gewindebohr-Hub ein Innengewinde-Rohprofi in einer Vorbohrungs-Wand erzeugbar ist, das den Gewinde-Außendurchmesser und einen, im Vergleich zum Gewinde-Kerndurchmesser noch reduzierten Gewinde-Innendurchmesser aufweist.

Die WO 2018/028810 A1 offenbart ein Werkzeug zur Erzeugung eines Innengewindes in einer Werkstück-Vorbohrung mit einem Gewinde-Außendurchmesser und einem Gewinde-Kerndurchmesser, wobei das Werkzeug einen Gewindeformabschnitt aufweist.

Die DE 10 2016 008478 A1 offenbart ein Verfahren zum Erzeugen einer Gewindebohrung in einem Werkstück mit einem Gewindebohr-Werkzeug, das an seiner Bohrerspitze eine Hauptschneide und ein in einer Gewindebohr-Richtung nacheilendes Gewindeprofil mit zumindest einem Gewinde-Schneidzahn aufweist.

Die Aufgabe der Erfindung besteht darin, ein Gewindebohr-Werkzeug sowie ein Verfahren zur Erzeugung einer Gewindebohrung in einem Werkstück bereitzustellen, mit dem eine dauerhaft betriebssichere Schraubverbindung gewährleistet ist.

Die Aufgabe ist durch die Merkmale des Anspruches 1 oder 12 gelöst. Bevorzugte Weiterbildungen der Erfindung sind in den Unteransprüchen offenbart.

Wie oben im gattungsgemäßen Stand der Technik bereits dargelegt, wird erfindungsgemäß mit dem Gewindebohr-Werkzeug im Gewindebohr-Hub zunächst ein Innengewinde-Rohprofil in der Vorbohrungs-Wand erzeugt. Das Innengewinde-Rohprofil weist bereits den endgültigen Gewinde-Außendurchmesser sowie einen Innengewinde-Innendurchmesser auf, der noch kleiner ist als der Gewinde-Kerndurchmesser im fertigbearbeiteten Innengewinde. Erfindungsgemäß ist, in der Werkzeug-Axialrichtung betrachtet, zwischen der an der Bohrerspitze ausgebildeten Vorbohr-Schneide und dem Gewindeformabschnitt eine zusätzliche Nachbohr-Schneide ausgebildet. Mittels der Nachbohr-Schneide kann im Reversier-Hub der Gewinde-Innendurchmesser bis auf den Gewinde-Kerndurchmesser aufgebohrt werden, und zwar unter Fertigstellung des Innengewindes. Die Aufbohrung des Innengewinde-Rohprofils erfolgt in einer Spanbearbeitung, etwa durch Schleifen oder Bohren, bei der das Innengewinde-Rohprofil auf den Gewinde-Kerndurchmesser geschliffen oder aufgebohrt wird.

In einer technischen Umsetzung kann der Formzahn des Gewindeformabschnittes einen radial äußeren Zahnkopf und einen davon über eine Zahnhöhe beabstandeten, radial inneren Zahngrund aufweisen. Der Zahnkopf kann auf einer Kreislinie liegen, deren Durchmesser größer als der Vorbohr-Durchmesser der Vorbohr-Schneide ist. Demgegenüber kann der Zahngrund auf einer Kreislinie liegen, deren Durchmesser kleiner ist als der Vorbohr-Durchmesser der Vorbohr-Schneide.

Die Nachbohr-Schneide kann auf einer Kreislinie liegen, deren Durchmesser kleiner ist als der Vorbohr-Durchmesser der Vorbohr-Schneide. Entsprechend kann die Nachbohr-Schneide auf einem Durchmesser liegen, der größer ist als der Innendurchmesser des Innengewinde-Rohprofils bzw. größer als der Zahngrund-Durchmesser sowie kleiner als der Zahnkopf-Durchmesser.

Im Hinblick auf eine reduzierte mechanische Werkzeug-Belastung ist es bevorzugt, wenn die Nachbohr-Schneide im Gewindebohr-Hub im Wesentlichen belastungsfrei in die Werkstück-Vorbohrung eingeführt wird. Erst im anschließenden Reversier-Hub ist der Nachbohr-Schneide aktiv, um das Innengewinde-Rohprofil aufzubohren. Im Reversier-Hub ist es im Hinblick auf eine reduzierte Werkzeug-Belastung von Vorteil, wenn der Gewindeformabschnitt und die Vorbohr-Schneide (insbesondere zusammen mit der Nebenschneide) im Gewindegang des Innengewindes, insbesondere belastungsfrei, aus der Gewindebohrung herausgeführt werden.

Die oben erwähnte, in Bohrer-Längsrichtung verlaufende Nachbohr-Schneide kann sich in der Werkzeug-Axialrichtung betrachtet, zwischen zwei Schneidecken erstrecken. Die Nachbohr-Schneide kann bevorzugt einen radial nach innen gekrümmten Kantenverlauf aufweisen. Auf diese Weise können Schnittflächenkanten am fertiggestellten Innengewinde entgratet werden.

Im Hinblick auf ein betriebssicheres Gewindeformen ist es bevorzugt, wenn das Gewindebohr-Werkzeug eine Verdrängungskammer aufweist, in die beim Gewindebohr-Hub das Werkstück-Material unter plastischer Verformung hineinverdrängt werden kann. Bevorzugt kann die Verdrängungskammer, in der Axialrichtung betrachtet, zwischen dem Nachbohr-Schneide und dem Gewindeformabschnitt positioniert sein. Ein radial innerer Kammerboden der Verdrängungskammer kann auf einer Kreislinie liegen, deren Durchmesser kleiner ist als der Nachbohr-Durchmesser der Nachbohr-Schneide.

Damit die im Gewindebohr-Hub erzeugten Späne betriebssicher abtransportiert werden können, weist das Gewindebohr-Werkzeug zumindest eine Spannut auf, die sich in der Werkzeug-Axialrichtung bis zur stirnseitigen Vorbohr-Schneide erstreckt. An der stirnseitigen Vorbohr-Schneide laufen eine, die Spannut begrenzende Spanfläche und eine stirnseitige Freifläche der Bohrerspitze zusammen. Zudem wird die Spannut, in der Werkzeug-Umfangsrichtung betrachtet, durch den Bohrersteg begrenzt. Die Spanfläche geht unter Bildung einer Nebenschneide in die außenumfangsseitige Rückenfläche des Bohrerstegs über. Die Nebenschneide und die stirnseitige Vorbohr-Schneide (verläuft stirnseitig an der Bohrerspitze in Querrichtung) laufen an einer radial äußeren Vorbohr-Schneidenecke zusammen, die auf dem bereits genannten Vorbohr-Durchmesser liegt.

Im Gewindebohr-Hub wird das Gewindebohr-Werkzeug mit einem Gewindebohr-Vorschub in der Gewindebohr-Richtung und mit einer damit synchronisierten Gewindebohr-Drehzahl in das Werkstück eingetrieben, wodurch die Vorbohrung erzeugt wird. Gleichzeitig wird im Gewindebohr-Hub mittels des nacheilenden Gewindeformabschnittes das Innengewinde-Rohprofil an der Innenwandung der Vorbohrung gebildet. Im Reversier-Hub kann das Gewindebohr-Werkzeug mit gegensinnigem Reversier-Vorschub sowie damit synchronisierter Reversier-Drehzahl aus der Gewindebohrung herausgeführt werden (im Wesentlichen belastungsfrei). Die im Gewindebohr-Hub erzeugten Späne werden in einer zur Gewindebohr-Richtung gegenläufigen Spanabfuhrrichtung aus der Gewindebohrung gefördert. Dabei kollidieren die Späne mit der Gewindeflanke des Innengewinde-Rohprofils, die den abzuführenden Spänen zugewandt ist. Dadurch kann die Späne zugewandte Gewindeflanke des Innengewinde-Rohprofils gegebenenfalls beschädigt werden, was zu Fehlstellen im Innengewinde führen kann. Solche Fehlstellen können wiederum das Setzverhalten eines in das Innengewinde verschraubten Schraubelementes beeinträchtigen. Vor diesem Hintergrund kann im Gewindebohr-Hub die Späne zugewandte Gewindeflanke des Innengewindes noch nicht auf ein Fertigmaß hergestellt sein, sondern vielmehr mit einem Flanken-Aufmaß hergestellt sein. Auf diese Weise wird an der Späne zugewandten Gewindeflanke eine Kollisionskontur bereitgestellt, mit der die abzuführenden Späne kollidieren.

Erst im nachgeschalteten Reversier-Hub wird das Flanken-Aufmaß von der Späne zugewandten Gewindeflanke des Innengewindes bis auf das Fertigmaß abgetragen. Der Materialabtrag an der Späne zugewandten Gewindeflanke erfolgt mit zumindest einem Reversierzahn, der im Gewindeformabschnitt das Gewindebohr-Werkzeugs ausgebildet ist.

In einer bevorzugten Ausführungsform folgt nach dem Gewindebohr-Hub nicht unmittelbar der Reversier-Hub, sondern folgt vielmehr ein Nutformschritt, bei dem eine in das Innengewinde anschließende Umlaufnut ohne Gewindesteigung gebildet wird, in der der Gewindeformabschnitt des Gewindebohr-Werkzeuges belastungsfrei drehen kann. Auf diese Weise kann die Gewindebohr-Drehzahl (nach Abschluss des Gewindebohr-Hubes) bis auf null reduziert werden, ohne dass aufgrund von übermäßig großer Schneidenbelastung zu einem Werkzeugbruch oder zu einem Ausbrechen des Gewindeformabschnittes kommt.

Wie aus der obigen Beschreibung hervorgeht, kann sich an das Innengewinde der Gewindebohrung die im Nutformschritt erzeugte Umlaufnut anschließen. Diese erfüllt die folgende Doppelfunktion: Erstens kann während der Gewindeherstellung der Gewindeformabschnitt des Gewindebohr-Werkzeugs belastungsfrei in der Umlaufnut drehen. Zweitens bildet die Umlaufnut beim Verschrauben einer Befestigungsschraube einen Ausgleichsraum, der Schraubenlängen-Toleranzen der Befestigungsschraube kompensiert.

Die Erfindung und ihre vorteilhaften Aus- und Weiterbildungen sowie deren Vorteile werden nachfolgend anhand der Figuren näher erläutert.

Es zeigen:
- Figur 1: in einer Seitenschnittdarstellung ein in einem Werkstück ausgebildetes Gewindesackloch;
- Figur 2 und 3: unterschiedliche Ansichten eines Gewindebohr-Werkzeugs;
- Figuren 4 bis 7: jeweils Ansichten, die die Erzeugung des in der Figur 1 gezeigten Gewindesackloches in einer Prozessabfolge veranschaulichen;
- Figuren 8 und 9: unterschiedliche Ansichten eines Gewindebohr-Werkzeug gemäß einem zweiten Ausführungsbeispiel.

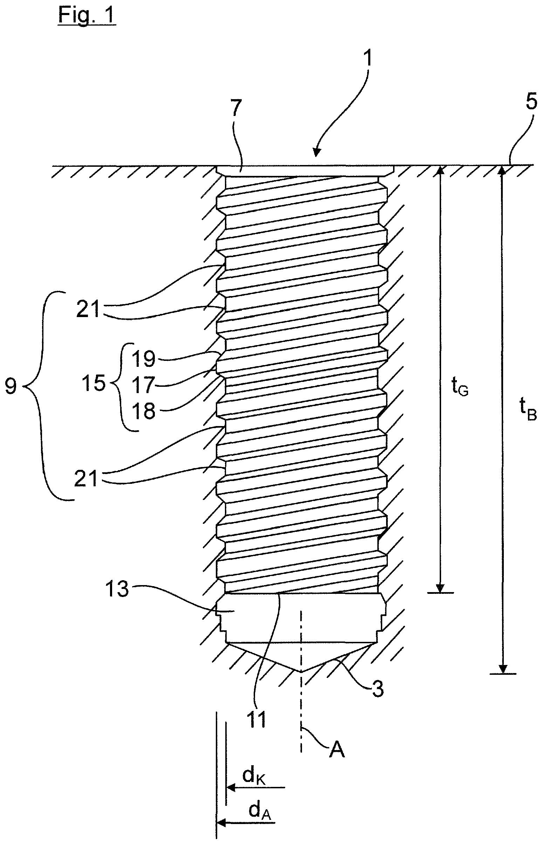

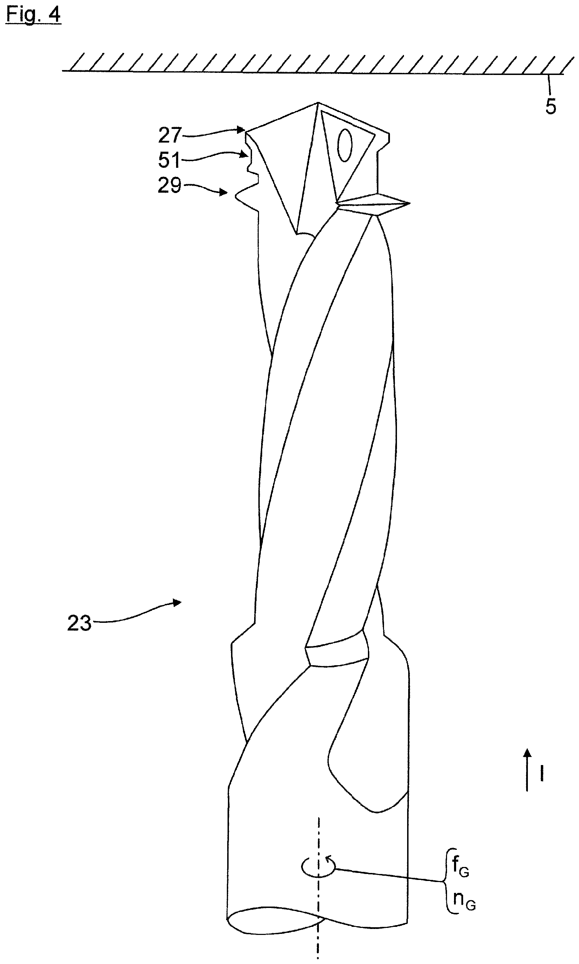

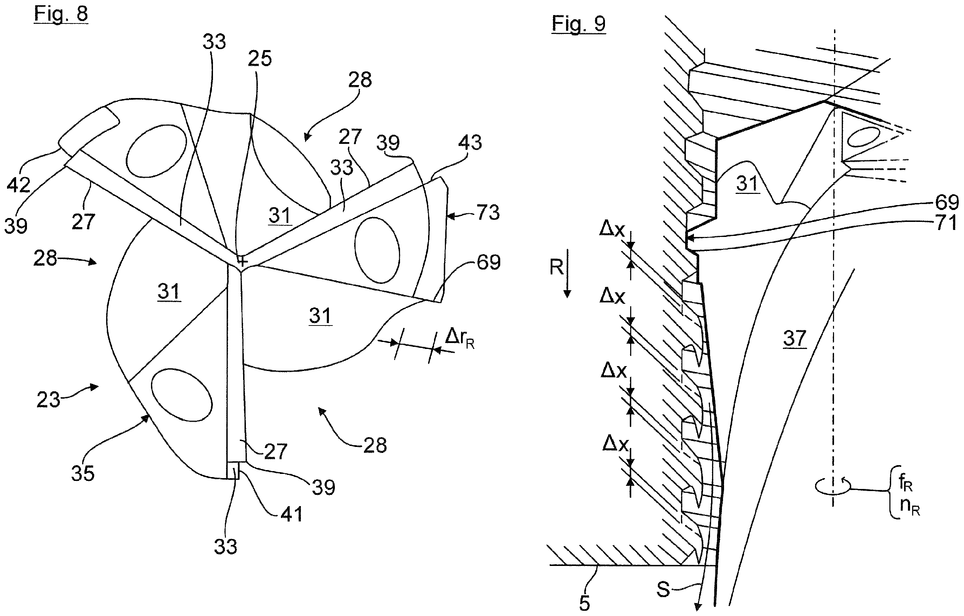

In der Figur 1 ist eine fertiggestellte Gewindesackloch-Bohrung 1 gezeigt. Die Bohrung 1 ist mit ihrem Bohrungsgrund 3 bis zu einer Soll-Bohrtiefe t_{B} in ein Werkstück 5 mittels einer sogenannten Einschuss-Bohrbearbeitung eingearbeitet, die später anhand der Figuren 4 bis 7 erläutert wird. Die Gewindebohrung 1 weist an ihrer Bohrungsöffnung eine umlaufende Gewindesenkung 7 auf, die im weiteren Verlauf nach unten in ein Innengewinde 9 übergeht. Das Innengewinde 9 erstreckt sich entlang der Bohrungsachse A bis zu einer nutzbaren Soll-Gewindetiefe t_{G}. Wie aus der Figur 1 weiter hervorgeht, mündet ein Gewindegang 15 des Innengewindes 9 mit einem Gewindeauslauf 11 in einer Umlaufnut 13. Diese weist keine Gewindesteigung auf und ist, in der Axialrichtung betrachtet, zwischen dem Innengewinde 9 und dem Bohrungsgrund 3 ausgebildet. Der Gewindegang 15 weist einen radial äußeren Gewindegrund 17 sowie seitlich obere und untere Gewindeflanken 18, 19 auf, die radial innen in einen Gewinde-Innenscheitel 21 übergehen. Der Gewindegrund 17 liegt auf einem Außendurchmesser d_{A}, während der Gewinde-Innenscheitel 21 auf einem Kerndurchmesser d_{K} liegt. Die in der Figur 1 obere Gewindeflanke 19 ist die später anhand der Figuren 8 und 9 beschriebene spänezugewandte Gewindeflanke, während in der Figur 1 untere Gewindeflanke 18 die späneabgewandte Gewindeflanke ist.

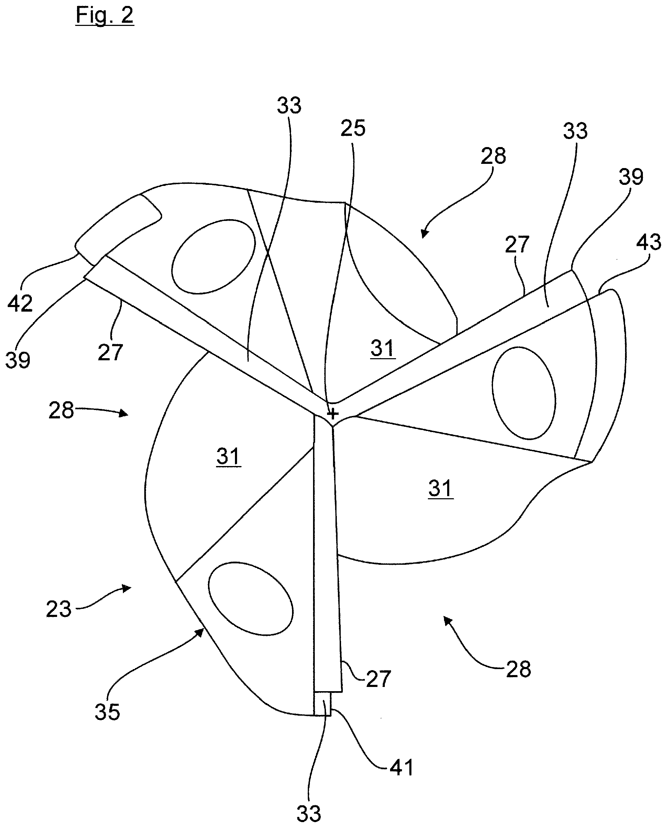

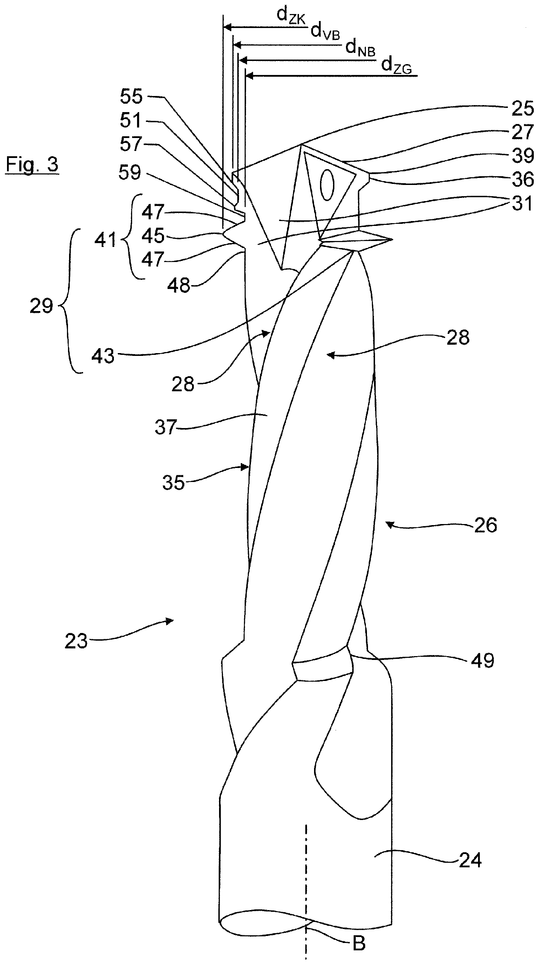

Die in der Figur 1 gezeigte Gewindesackloch-Bohrung 1 wird mit Hilfe eines nachfolgend anhand der Figuren 2 und 3 beschriebenen Gewindebohr-Werkzeugs 23 hergestellt. Demzufolge weist das Werkzeug 23 in der Figur 2 an seiner Bohrerspitze 25 drei gleichmäßig umfangsverteilte stirnseitige sowie querverlaufende Vorbohr-Schneiden 27 sowie einen in der Gewindebohr-Richtung I (Figur 4) nacheilenden Gewindeformabschnitt 29 (Figur 3) auf.

Das Werkzeug 23 ist in der Figur 3 mit einem Spannschaft 24 sowie einem daran anschließenden Gewindebohr-Körper 26 aufgebaut, entlang dessen Bohrungsachse A sich insgesamt drei umfangsseitig verteilte Spannuten 28 bis zu der jeweiligen stirnseitigen Vorbohr-Schneide 27 an der Bohrerspitze 25 erstrecken.

An jeder Vorbohr-Schneide 27 läuft eine, die Spannut 28 begrenzende Spanfläche 31 und eine stirnseitige Freifläche 33 (Figur 2) der Bohrerspitze 25 zusammen. In der Werkzeug-Umfangsrichtung ist die jeweilige Spannut 28 durch einen Bohrersteg 35 begrenzt. Insgesamt weist das in den Figuren gezeigte Gewindebohr-Werkzeug 23 drei Bohrerstege 35 auf. Die Spanfläche 31 der Spannut 28 geht unter Bildung einer Nebenschneide 36 in eine außenumfangsseitige Rückenfläche 37 des jeweiligen Bohrerstegs 35 über. Die Nebenschneide 36 und die stirnseitige Vorbohr-Schneide 27 laufen an einer radial äußeren Vorbohr-Schneidenecke 39 zusammen.

An den außenumfangsseitigen Rückenflächen 37 der drei Bohrerstege 35 weist der Gewindeformabschnitt 29 jeweils einen Formzahn 41, 42 und 43 auf. Jeder der Formzähne 41, 42, 43 ist in der Figur 3 mit einer radial äußeren Gewindegrund-Formkante 45 sowie Gewindeflanken-Formkanten 47 ausgebildet, um den in der Figur 1 gezeigten Gewindegang 15 spanlos zu formen. Die Formzähne 41 bis 43 sind dabei in unterschiedlichen Geometrien ausgeführt sowie mit unterschiedlichen Axialabständen an der Bohrerspitze 25 beabstandet, um den in der Figur 1 gezeigten Gewindegang 15 des Innengewindes 9 zu formen.

Das Gewindebohr-Werkzeug 23 weist zudem am Übergang zwischen dem Gewindebohr-Körper 26 und dem Spannschaft 24 eine Schneidkante 49 zur Bildung der in der Figur 1 gezeigten Gewindesenkung 7 auf.

Wie aus der Figur 3 oder 4 weiter hervorgeht, ist, in der Werkzeug-Axialrichtung betrachtet, zwischen der an der Bohrerspitze 25 ausgebildeten Vorbohr-Schneide 27 und dem Gewindeformabschnitt 29 eine sich in der Bohrer-Längsrichtung erstreckende Nachbohr-Schneide 51 ausgebildet, deren Funktion später erläutert wird. Die Nachbohr-Schneide 51 erstreckt sich in der Figur 3 zwischen einer, der Bohrerspitze 25 zugewandten Schneidenecke 55 und einer davon abgewandten Schneidenecke 57. Die Nachbohr-Schneide 51 weist in der Figur 3 einen radial nach innen gekrümmten Kantenverlauf auf, dessen Wirkung später beschrieben ist.

Wie aus der Figur 3 weiter hervorgeht, geht die von der Bohrerspitze 25 abgewandte Schneidenecke 57 in eine nutförmige Verdrängungskammer 59 über, an die sich der Formzahn 41 anschließt. In die Verdrängungskammer 59 wird beim Gewindebohr-Hub G das Werkstück-Material unter plastischer Verformung hinein verdrängt.

In der Figur 3 liegt der Zahnkopf 45 des Formzahns 41 auf einer Kreislinie mit einem Durchmesser d_{ZK}. Die Vorbohr-Schneidenecke 39 liegt auf einer Kreislinie mit einem Vorbohr-Durchmesser d_{VB}, der größer ist als größer ist als der Zahnkopf-Durchmesser d_{ZK}. Der Zahngrund des Formzahns 41 liegt auf einer Kreislinie, deren Durchmesser d_{ZG} kleiner ist als der Vorbohr-Durchmesser d_{VB} der Vorbohr-Schneide 27. Zudem liegt die Nachbohr-Schneide 53 auf einer Kreislinie, deren Nachbohr-Durchmesser d_{NB} kleiner ist als der Vorbohr-Durchmesser d_{VB} der Vorbohr-Schneide 27.

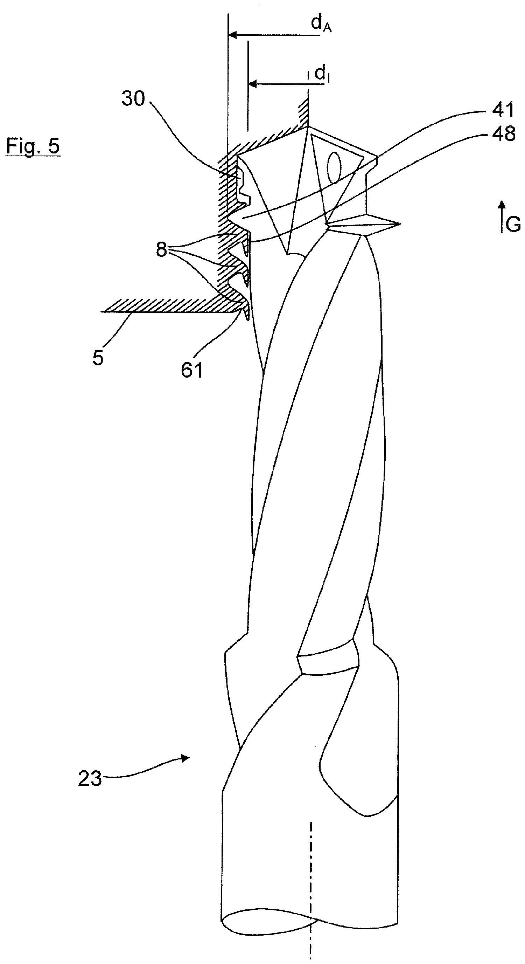

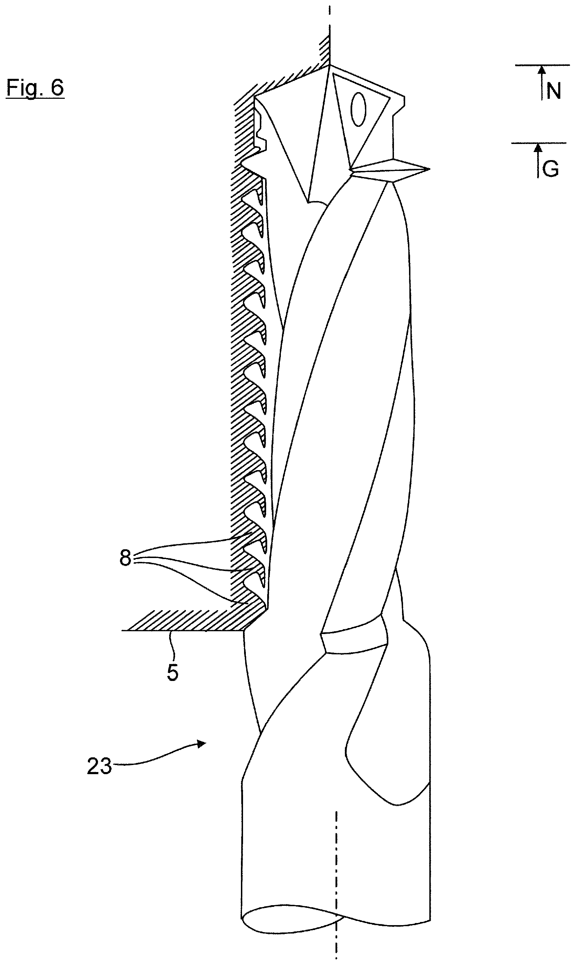

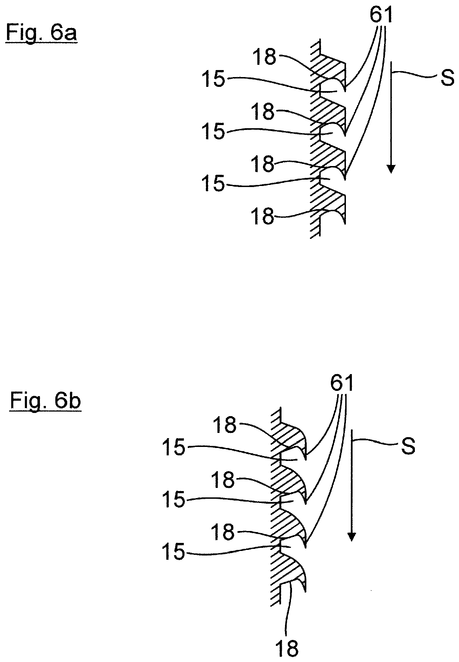

Nachfolgend wird anhand der Figuren 4 bis 7 das Verfahren zur Erzeugung der in der Figur 1 gezeigten Gewindesackloch-Bohrung 1 beschrieben: Demzufolge wird in der Figur 4 das Gewindebohr-Werkzeug 23 in einer Gewindebohr-Richtung 1 auf das noch nicht vorgebohrte Werkstück 5 geführt und eine Einschuss-Bohrung durchgeführt. Im Gewindebohr-Hub G (Figur 5 oder 6) erzeugt die Vorbohr-Schneide 27 eine Vorbohrung 30 (Figur 5) mit dem Vohrbohr-Durchmesser d_{VB}. Der nacheilende Gewindeformabschnitt 29 erzeugt an der Innenwandung der Vorbohrung 30 ein Innengewinde-Rohprofil 8 (Figuren 5, 6 und 7). Der Gewindebohr-Hub G wird bei einem Gewindebohr-Vorschub f_{G} und bei damit synchronisierter Gewindebohr-Drehzahl n_{G} in einer Gewindebohr-Drehrichtung durchgeführt, und zwar bis die Soll-Gewindetiefe t_{G} erreicht ist. Während des obigen Gewindeform-Hubes G wird die Nachbohr-Schneide 51 belastungsfrei in die Werkstück-Vorbohrung 30 eingefahren.

Bei dem im Gewindebohr-Hub G erzeugten Innengewinde-Rohprofil 8 liegt der radial äußeren Gewindegrund 17 bereits auf dem Außendurchmesser d_{A} (vgl. Figur 1), während der Gewinde-Innenscheitel 21 noch auf einen Innendurchmesser d_{I} liegt, der kleiner als der Gewinde-Kerndurchmesser d_{K} (Figur 1) ist. Am Gewinde-Innenscheitel 21 des Innengewinde-Rohprofils 8 sind Materialschwächungen bzw. Fehlerstellen (Figur 5, 6 oder 7) mit Ausformkrallen 61 ausgebildet.

Die Formzähne 41, 42, 43 sowie der jeweilige, in Bohrrichtung nacheilende Zahngrund 48 (Figuren 3 oder 5) sind so ausgelegt, dass sich die anhand der Figuren 5 bis 7 beschriebene spezielle Geometrie der Ausformkralle 61 wie folgt ergibt: Demnach wird im Gewindebohr-Hub G (Figuren 5 bis 7) vom jeweiligen Formzahn 41, 42, 43 Werkstück-Material an der Innenwand der Vorbohrung 30 so verformt, dass vom Innengewinde-Rohprofil 8 Werkstück-Material nach radial innen verdrängt wird, und zwar unter Bildung der Ausformkralle 61.

Die zunächst noch radial nach innen vorragende Ausformkralle 61 wird im weiteren Verlauf des Gewindebohr-Hubs G von dem nacheilenden Zahngrund 48 umgebogen. Die Umbiegung der Ausformkralle 61 erfolgt entgegen der Bohrrichtung, so dass die Ausformkralle 61 den Gewindegang 15 des Innengewinde-Rohprofils 8 zumindest teilweise überdeckt. Auf diese Weise wird der Gewindegang 15 im Gewindebohr-Hub G zumindest teilweise geschlossen. Die in der Spanabführrichtung S (Figuren 6a, 6b oder 9) abgeführten Späne können sich daher nicht mehr im Gewindegang 15 verhaken, so dass die Gefahr eines frühzeitigen Werkzeugbruches verhindert ist.

In den vergrößerten Teilansichten der Figuren 6a und 6b sind unterschiedliche Ausformkrallen-Geometrien gezeigt. Gemäß der Figur 6a ist das Werkstück-Material an der Innenwand der Vorbohrung 30 so verformt, dass sich die Ausformkralle 61 lediglich an der späneabgewandten Gewindeflanke 18 des Innengewinde-Rohprofils 8 bildet.

Unmittelbar anschließend an den Gewindebohr-Hub G wird ein Nutformschritt (Figur 6) durchgeführt, bei dem der Gewindebohr-Hub G in der Gewindebohr-Richtung I um einen Nutform-Hub N verlängert wird. Im Unterschied zum Gewindeform-Hub G sind im Nutform-Hub N der Nutform-Vorschub f_{N} und die Nutform-Drehzahl n_{N} des Gewindebohr-Werkzeugs 23 nicht zueinander synchronisiert sowie unterschiedlich zum vorangegangenen Gewindebohr-Vorschub f_{G} und zur Gewindebohr-Drehzahl n_{G}.

Auf diese Weise wird mittels der Formzähne 41, 42, 43 sowie der Vorbohr-Schneide 27 die in der Figur 6 gezeigte Umlaufnut 13 erzeugt, in der der Gewindeformabschnitt 29 belastungsfrei drehen kann.

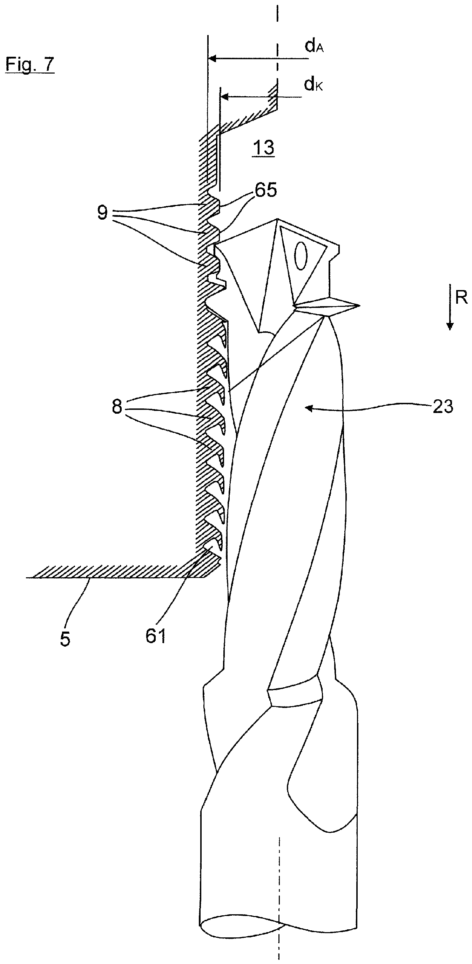

Bei Erreichen der Soll-Bohrungstiefe t_{b} wird sowohl der Nutform-Vorschub f_{N} als auch die Nutform-Drehzahl n_{N} auf null reduziert. Anschließend erfolgt zur Vorbereitung eines Reversier-Hubes R (Figur 7) eine Drehrichtungsumkehr. Im Reversier-Hub R wird das Gewindebohr-Werkzeug 23 in einer Reversier-Richtung aus der Gewindebohrung 1 herausgeführt, und zwar mit einem entgegengesetzten Reversier-Vorschub f_{R} sowie damit synchronisierter Reversier-Drehzahl n_{R}. Diese Parameter sind so bemessen, dass der Gewindeformabschnitt 29 des Gewindebohr-Werkzeugs 23 im Wesentlichen belastungsfrei im Gewindegang 15 des Innengewindes 9 aus der Gewindebohrung geführt wird.

Im Reversier-Hub R werden sowohl die Formzähne 41, 42, 43 als auch die Vorbohr-Schneide 27 mitsamt Nebenschneide 36 im Gewindegang 15 belastungsfrei aus der Gewindebohrung 1 herausgeführt. Zudem erfolgt im Reversier-Hub R eine Endbearbeitung, bei der der Nachbohr-Abschnitt 13 den Gewinde-Innendurchmesser d_{I} des Innengewinde-Rohprofils 8 bis auf den Gewinde-Kerndurchmesser d_{K} aufbohrt, und zwar unter Bildung des fertiggestellten Innengewindes 9. Der Materialabtrag ist dabei so gewählt, dass die Ausformkrallen 61 am Gewinde-Innenscheitel 21 komplett abgetragen werden. Durch den radial nach innen gekrümmten Kantenverlauf der Nachbohr-Schneide 51 können zugleich auch die Schnittflächenkanten 65 (Figur 7) am bearbeiteten Gewinde-Innenscheitel 21 des fertiggestellten Innengewindes 9 entgratet werden.

Nachfolgend werden anhand der Figuren 8 und 9 der Aufbau und die Wirkungsweise eines Gewindebohr-Werkzeugs 23 gemäß einem weiteren Ausführungsbeispiel beschrieben. Das in der Figur 8 oder 9 gezeigte Gewindebohr-Werkzeug 23 entspricht grundsätzlich dem der vorangegangenen Figuren. Von daher wird auf die Vorbeschreibung verwiesen. Das in der Figur 8 oder 9 gezeigte Gewindebohr-Werkzeug 23 weist zusätzlich einen Reversierzahn 69 auf, mit dem im anhand der Figur 9 beschriebenen Reversier-Hub R ein Flanken-Aufmaß Δx von der spänezugewandten Gewindeflanke 19 abgetragen wird.

Im Reservier-Hub R wird das Gewindebohr-Werkzeug 23 so angesteuert, dass der Reversierzahn 69 das Flanken-Aufmaß Δx von der spänezugewandten Gewindeflanke 19 bis auf das Fertigmaß abträgt oder abformt.

Der Reversierzahn 57 ist in der Figur 8, wie auch die Formzähne 41, 42, 43, auf der Bohrersteg-Rückenfläche 37 ausgebildet. Der Reversierzahn 57 überragt dabei die Vorbohr-Schneidenecke 39 um eine Reversier-Zahnhöhe Δr_{R} (Figur 8) radial nach außen.

Wie in der Figur 9 angedeutet, laufen an einer Reversier-Schneide 71 des Reversierzahns 69 die außenumfangsseitige Bohrersteg-Rückenfläche 37 und die Spanfläche 31 der Spannut 28 zusammen.

Um einen stabilen Gewindeformabschnitt 29 am Gewindebohr-Werkzeug auszubilden, sind in der Figur 8 der Reversierzahn 69 und der Formzahn 43 über einen Zahnsteg 73 miteinander verbunden. Dieser ist jeweils auf der Bohrersteg-Rückenfläche 37 ausgebildet. Dadurch ist der Reversierzahn 57 im Gewindebohr-Hub G und/oder im Reversier-Hub R vor einem frühzeitigen Werkzeugbruch geschützt.

### BEZUGSZEICHENLISTE

- 1: Gewindebohrung
- 3: Bohrungsgrund
- 5: Werkstück
- 7: Gewindesenkung
- 8: Innengewinde-Rohprofil
- 9: Innengewinde
- 11: Gewindeauslauf
- 13: Umlaufnut
- 15: Gewindegang
- 17: radial äußerer Gewindegrund
- 18, 19: Gewindeflanken
- 21: Gewinde-Innenscheitel
- 23: Gewindebohr-Werkzeug
- 25: Bohrerspitze
- 27: Vorbohr-Schneide
- 29: Gewindeformabschnitt
- 24: Spannschaft
- 26: Gewindebohr-Körper
- 28: Spannut
- 30: Vohrbohrung
- 32: Nachbohr-Abschnitt
- 31: Spanfläche
- 33: stirnseitige Freifläche
- 35: Bohrersteg
- 36: Nebenschneide
- 37: außenumfangsseitige Rückenfläche
- 39: radial äußere Vorbohr-Schneidenecke
- 41,42,43: Formzähne
- 45: radial äußerer Gewindegrund-Formkante
- 49: Zahngrund
- 47: Gewindeflanken-Formkanten
- 51: Nachbohr-Schneide
- 55, 57: Schneidenecken
- 59: Verdrängungskammer
- 61: Ausformkralle
- 65: Schnittflächenkanten
- 69: Reversierzahn
- 71: Reversierzahn-Schneide
- 73: Zahnsteg
- S: Spanabfuhrrichtung
- d_{ZK}: Zahnkopf-Durchmesser
- d_{ZG}: Zahngrund-Durchmesser
- d_{VB}: Vorbohr-Durchmesser
- d_{NB}: Nachbohr-Durchmesser
- d_{A}: Gewinde-Außendurchmesser
- d_{I}: Gewinde-Innendurchmesser
- d_{K}: Gewinde-Kerndurchmesser
- Δx: Flanken-Aufmaß
- G: Gewindebohr-Hub
- N: Nutform-Hub
- R: Reversier-Hub

## Patentansprüche

1. Gewindebohr-Werkzeug zur Erzeugung einer Werkstück-Gewindebohrung (1), dessen Innengewinde (9) einen Gewinde-Außendurchmesser (d_{A}) und einen Gewinde-Kerndurchmesser (d_{K}) aufweist, wobei das Gewindebohr-Werkzeug (23) in einem Gewindebohr-Hub (G) in das nicht vorgebohrte Werkstück (5) eintreibbar ist, und in einem Reversier-Hub (R) das Gewindebohr-Werkzeug (23) in einer gegensinnigen Drehbewegung aus der Gewindebohrung (1) herausführbar ist, wobei an einer Bohrerspitze (25) des Gewindebohr-Werkzeugs (23) eine stirnseitige Vorbohr-Schneide (27) zur Erzeugung einer Vorbohrung (30) ausgebildet ist, und wobei ein Gewindeformabschnitt (29) mit zumindest, insbesondere genau einem Formzahn (41, 42, 43) ausgebildet ist, mit dem im Gewindebohr-Hub (G) ein Innengewinde-Rohprofil (8) in einer Vorbohrungs-Wand erzeugbar ist, das den Gewinde-Außendurchmesser (d_{A}) und einen, im Vergleich zum Gewinde-Kerndurchmesser (d_{K}) noch reduzierten Gewinde-Innendurchmesser (d_{I}) aufweist, wobei in der Werkzeug-Axialrichtung zwischen der an der Bohrerspitze (25) ausgebildeten Vorbohr-Schneide (27) und dem Gewindeformabschnitt (29) eine Nachbohr-Schneide (51) bereitgestellt ist, mittels der im Reversier-Hub (R) der Gewinde-Innendurchmesser (d_{I}) bis auf den Gewinde-Kerndurchmesser (d_{K}) aufweitbar ist, und zwar unter Bildung des fertiggestellten Innengewindes (9), **dadurch gekennzeichnet, dass** der Gewindeformabschnitt (29) an zumindest einem Bohrersteg (35) ausgebildet ist.

2. Gewindebohr-Werkzeug nach Anspruch 1, **dadurch gekennzeichnet, dass** der Formzahn (41, 42, 43) des Gewindeformabschnittes (29) einen radial äußeren Zahnkopf (45) und einen davon über eine Zahnhöhe beabstandeten, radial inneren Zahngrund aufweist, und dass der Zahnkopf (45) auf einer Kreislinie liegt, deren Durchmesser (d_{ZK}) größer als der Vorbohr-Durchmesser (d_{VB}) der Vorbohr-Schneide (27) ist, und dass insbesondere der Zahngrund auf einer Kreislinie liegt, deren Durchmesser (d_{ZG}) kleiner als der Vorbohr-Durchmesser (d_{VB}) der Vorbohr-Schneide (27) ist.

3. Gewindebohr-Werkzeug nach Anspruch 1 oder 2, **dadurch gekennzeichnet, dass** die Nachbohr-Schneide (51) auf einer Kreislinie liegt, deren Durchmesser (d_{NB}) kleiner als der Vorbohr-Durchmesser (d_{VB}) der Vorbohr-Schneide (27) ist, und/oder größer als der Innendurchmesser (d_{I}) des Innengewinde-Rohprofils (8) ist bzw. größer als der Zahngrund-Durchmesser (d_{ZG}) ist und kleiner als der Zahnkopf-Durchmesser (d_{ZK}) ist.

4. Gewindebohr-Werkzeug nach Anspruch 1, 2 oder 3, **dadurch gekennzeichnet, dass** die Nachbohr-Schneide (51) im Gewindebohr-Hub (G) belastungsfrei in die Werkstück-Vorbohrung (30) eingeführt wird, und dass die Nachbohr-Schneide (51) im anschließenden Reversier-Hub (R) das Innengewinde-Rohprofil (8) unter Fertigstellung des Innengewindes (9) aufbohrt.

5. Gewindebohr-Werkzeug nach Anspruch 3 oder 4, **dadurch gekennzeichnet, dass** die Nachbohr-Schneide (51) sich in der Werkzeug-Axialrichtung zwischen zwei Schneidecken (55, 57) erstreckt, und dass insbesondere die Nachbohr-Schneide (51) einen radial nach innen gekrümmten Kantenverlauf aufweist, wodurch Schnittflächenkanten (65) am fertiggestellten Innengewinde (9) entgratet werden können.

6. Gewindebohr-Werkzeug nach einem der vorhergehenden Ansprüche, **dadurch gekennzeichnet, dass** zwischen der Nachbohr-Schneide (51) und dem Gewindeformabschnitt (29) eine Verdrängungskammer (59) ausgebildet ist, in die beim Gewindebohr-Hub (G) das Werkstück-Material unter plastischer Verformung hinein verdrängt wird, und dass insbesondere ein radial innerer Kammerboden auf einer Kreislinie liegt, deren Durchmesser kleiner als der Nachbohr-Durchmesser (d_{NB}) ist.

7. Gewindebohr-Werkzeug nach einem der vorhergehenden Ansprüche, **dadurch gekennzeichnet, dass** der Formzahn (41, 42, 43) im Gewindebohr-Hub (G) eine radial nach innen abragende Ausformkralle (61) am Gewinde-Innenscheitel (21) erzeugt, und dass im weiteren Verlauf des Gewindebohr-Hubs (G) die radial nach innen abragende Ausformkralle (61) umgebogen wird, wodurch der Gewindegang (15) zumindest teilweise überdeckt wird.

8. Gewindebohr-Werkzeug nach Anspruch 7, **dadurch gekennzeichnet, dass** der im Gewindebohr-Hub (G) erfolgende Umbiege-Vorgang mit Hilfe eines, dem Formzahn (41, 42, 43) in der Bohrrichtung nacheilenden Zahngrunds (48) durchgeführt wird, und/oder dass im Umbiege-Vorgang die Ausformkralle (61) entgegen der Bohrrichtung, d.h. insbesondere in einer Spanabführrichtung (S), umgebogen wird.

9. Gewindebohr-Werkzeug nach einem der vorhergehenden Ansprüche, **dadurch gekennzeichnet, dass** sich entlang der Werkzeug-Axialrichtung zumindest eine Spannut (28) bis zu der stirnseitigen Vorbohr-Schneide (27) erstreckt, und dass an der stirmseitigen Vorbohr-Schneide (27) eine die Spannut (28) begrenzende Spanfläche (31) und eine stirnseitige Freifläche (33) der Bohrerspitze (25) zusammenlaufen, und/oder dass in der Werkzeug-Umfangsrichtung die Spannut (28) durch den Bohrersteg (35) begrenzt ist und die Spanfläche (31) unter Bildung einer Nebenschneide (36) in die außenumfangsseitige Rückenfläche (37) des Bohrerstegs (35) übergeht, und/oder dass die Nebenschneide (36) und die stirnseitige Vorbohr-Schneide (27) an einer radial äußeren Vorbohr-Schneidenecke (39) zusammenlaufen, die auf dem Vorbohr-Durchmesser (d_{VB}) liegt.

10. Gewindebohr-Werkzeug nach einem der vorhergehenden Ansprüche, **dadurch gekennzeichnet, dass** im Gewindebohr-Hub (G) das Gewindebohr-Werkzeug (23) mit einem Gewindebohr-Vorschub (f_{G}) in der Gewindebohr-Richtung (I) und mit einer damit synchronisierten Gewindebohr-Drehzahl (n_{G}) in das Werkstück (5) eintreibbar ist und die Vorbohrung (30) erzeugt sowie der Gewindeformabschnitt (29) das Innengewinde-Rohprofil (8) an der Innenwandung der Vorbohrung (30) bildet, und/oder dass im Reversier-Hub (R) das Gewindebohr-Werkzeug (23) mit gegensinnigem Reversier-Vorschub (f_{R}) sowie damit synchronisierter Reversier-Drehzahl (n_{R}) aus der Gewindebohrung herausführbar ist, und/oder dass im Gewindebohr-Hub (G) Späne erzeugt werden, die in einer zur Gewindebohr-Richtung (I) gegenläufigen Spanabfuhrrichtung (S) aus der Gewindebohrung gefördert werden und dabei mit der spänezugewandten Gewindeflanke (19) des Innengewinde-Rohprofils (8) kollidieren, die den abzuführenden Spänen zugewandt ist, und/oder dass nach dem Gewindebohr-Hub (G) nicht unmittelbar der Reversier-Hub (R), sondern ein Nutform-Hub (N) folgt, bei dem eine an das Innengewinde (9) anschließende Umlaufnut (13) ohne Gewindesteigung gebildet wird, in der der Gewindeformabschnitt (29) des Gewindebohr-Werkzeuges (23) belastungsfrei drehen kann.

11. Gewindebohr-Werkzeug nach Anspruch 10, **dadurch gekennzeichnet, dass** der Gewindeformabschnitt (29) zumindest einen Reversierzahn (69) mit einer Gewindeflanken-Schneid-/Formkante aufweist, mittels der beim Reversier-Hub (R) ein Flanken-Aufmaß (Δx) von der spänezugewandten Gewindeflanke (19) des Innengewinde-Rohprofils (8) abtragbar und/oder abformbar ist.

12. Verfahren zur Erzeugung einer Gewindebohrung (1) in einem nicht vorgebohrten Werkstück (5) mittels eines Gewindebohr-Werkzeugs nach einem der vorhergehenden Ansprüche.

## Claims

1. Tapping tool for creating a threaded hole (1) in a workpiece, the inner thread (9) of which has a thread outer diameter (d_{A}) and a thread core diameter (d_{K}), wherein in a tapping stroke (G) the tapping tool (23) is driveable into the workpiece (5) which is not pre-drilled, and in a reversing stroke (R) the tapping tool (23) can be guided out of the threaded hole (1) in a contrary rotational movement, wherein on a drill tip (25) of the tapping tool (23) is formed an end-face-side pre-drill cutting edge (27) for forming a pilot hole (30), and wherein a thread-forming section (29) is formed with at least, in particular precisely one, shaping tooth (41, 42, 43), with which in the tapping stroke (G) an inner thread raw profile (8) can be created in a pre-drill wall which has the thread outer diameter (d_{A}) and a thread inner diameter (d_{I}) which is reduced even in comparison to the thread core diameter (d_{K}), wherein in the tool axial direction between the pre-drill cutting edge (27) formed on the drill tip (25) and the thread-forming section (29) is provided a re-drill cutting edge (51), by means of which in the reversing stroke (R) the thread inner diameter (d_{I}) can be widened to the thread core diameter (d_{K}) while forming the finished inner thread (9), **characterised in that** the thread-forming section (29) is formed on at least one drill web (35).

2. Tapping tool according to claim 1, **characterised in that** the shaping tooth (41, 42, 43) of the thread-forming section (29) comprises a radially outer tooth head (45) and a radially inner tooth base, distanced therefrom via a tooth height, and that the tooth head (45) lies on a circular line, the diameter (d_{ZK}) of which is greater than the pre-drill diameter (d_{VB}) of the pre-drill cutting edge (27), and that in particular the tooth base lies on a circular line, the diameter (d_{ZG}) of which is smaller than the pre-drill diameter (d_{VB}) of the pre-drill cutting edge (27).

3. Tapping tool according to claim 1 or 2, **characterised in that** the re-drill cutting edge (51) lies in a circular line, the diameter (d_{NB}) of which is smaller than the pre-drill diameter (d_{VB}) of the pre-drill cutting edge (27), and/or is greater than the inner diameter (d_{I}) of the inner thread raw profile (8) or is greater than the tooth base diameter (d_{ZG}) and smaller than the tooth head diameter (d_{ZK}).

4. Tapping tool according to claim 1, 2 or 3, **characterised in that** the re-drill cutting edge (51) in the tapping stroke (G) is introduced in an load-free manner into the workpiece pilot hole (30), and that in the subsequent reversing stroke the re-drill cutting edge (51) (R) drills the inner thread raw profile (8) to finish the inner thread (9).

5. Tapping tool according to claim 3 or 4, **characterised in that** the re-drill cutting edge (51) extends in the tool axial direction between two cutting corners (55, 57), and that in particular the re-drill cutting edge (51) has an edge course which is curved radially to the inside, as a result of which cutting surface edges (65) on the finished inner thread (9) can be deburred.

6. Tapping tool according to any of the previous claims, **characterised in that** between the re-drill cutting edge (51) and the thread-forming section (29) is formed a displacement chamber (59) into which, during the tapping stroke (G), the workpiece material is displaced during plastic deformation, and that in particular a radially inner chamber base lies on a circular line, the diameter of which is smaller than the re-drill diameter (d_{NB}).

7. Tapping tool according to any of the previous claims, **characterised in that** during the tapping stroke (G) the shaping tooth (41, 42, 43) generates a shaping claw (61), protruding radially to the inside, on the thread inner vertex (21), and that during the further course of the tapping stroke (G) the shaping claw (61) protruding radially to the inside is bent, as a result of which the course of the thread (15) is at least partially covered.

8. Tapping tool according to claim 7, **characterised in that** the bending procedure taking place during the tapping stroke (G) is carried out with the aid of a tooth base (48) which follows the shaping tooth (41, 42, 43) in the drilling direction, and/or that during the bending procedure the shaping claw (61) is bent against the drilling direction, particularly in a chip removal direction (S).

9. Tapping tool according to any of the preceding claims, **characterised in that** at least one chip groove (28) extends along the tool axial direction as far as the end-face pre-drill cutting edge (27), and that at the end-face pre-drill cutting edge (27) a chip surface (31) delimiting the chip groove (28) and an end-face free surface (33) of the drill tip (25) converge, and/or, in the tool circumferential direction, the chip groove (28) is delimited by the drill web (35) and the chip surface (31) transitions into the rear surface (37) of the drill web (35) on the outer circumferential side, forming a secondary cutting edge (36), and/or that the secondary cutting edge (36) and the end-face pre-drill cutting edge (27) converge at a radially outer pre-drill cutting corner (39) which lies on the pre-drill diameter (d_{VB}).

10. Tapping tool according to any of the preceding claims, **characterised in that** in the tapping stroke (G) the tapping tool (23) can be driven with a tapping feed (f_{G}) in the tapping direction (I) and with a tapping rotational speed (n_{G}), synchronised therewith, into the workpiece (5) and creates the pilot hole (30) and the thread-forming section (29) forms the inner thread raw profile (8) on the inner wall of the pilot hole (30), and/or that in the reversing stroke (R) the tapping tool (23) can be conducted with an opposing reverse-feed (f_{R}) and a reversing rotational speed (n_{R}), synchronised therewith, out of the threaded hole, and/or in the tapping stroke (G) chips are generated which are conveyed in a chip removal direction (S) contrary to the tapping direction (I) out of the threaded bore and thereby collide with the chip-facing thread flank (19), which faces the chips to be removed, of the inner thread raw profile (8), and/or that after the tapping stroke (G) the reversing stroke (R) does not follow directly but rather a groove-forming stroke (N), in which a circumferential groove (13) adjoining on the inner thread (9) is formed without thread pitch, in which the thread-forming section (29) of the tapping tool (23) can turn in a load-free manner.

11. Tapping tool according to claim 10, **characterised in that** in the thread-forming section (29) has at least one reversing tooth (69) with a thread flank cutting/shaping edge, by means of which during the reversing stroke (R) a flank oversize (Δx) can be removed and/or moulded out of the thread flank (19), facing the chips, of the inner thread raw profile (8).

12. Method for creating a threaded hole (1) in a workpiece (5) which is not pre-drilled, by means of a tapping tool according to any of the preceding claims.

## Revendications

1. Outil de taraudage pour la production d'un trou taraudé de pièce à usiner (1), dont le taraudage intérieur (9) présente un diamètre extérieur de taraudage (d_{A}) et un diamètre de noyau de taraudage (d_{K}), dans lequel l'outil de taraudage (23), dans une course de taraudage (G), peut être enfoncé dans la pièce à usiner (5) non perforée, et l'outil de taraudage (23), dans une course inverse (R), peut être guidé hors du trou taraudé (1) par un mouvement rotatif dans des directions opposées, dans lequel une arête coupante de pré-perçage (27) de côté avant permettant de produire un préperçage (30) est réalisée au niveau d'une pointe de foret (25) de l'outil de taraudage (23), et dans lequel une section de façonnage de taraudage (29) comportant au moins, en particulier, une dent de façonnage (41, 42, 43) est réalisée, à l'aide de laquelle, dans la course de taraudage (G), un profil tubulaire de taraudage intérieur (8) peut être produit dans une paroi de préperçage, qui présente présente le diamètre extérieur de taraudage (d_{A}) et un diamètre intérieur de taraudage (d_{I}) plus réduit par rapport au diamètre de noyau de taraudage (d_{K}), dans lequel
une arête coupante de post-perçage (51) est prévu dans la direction axiale de l'outil, entre l'arête coupante de pré-perçage (27) réalisée au niveau de la pointe de foret (25) et la section de façonnage de taraudage (29), au moyen de laquelle, dans la course inverse (R), le diamètre intérieur de taraudage (d_{I}) peut être élargi jusqu'au diamètre de noyau de taraudage (d_{K}), et, précisément, en formant le diamètre intérieur (9) achevé, **caractérisé en ce que** la section de façonnage de taraudage (29) est réalisée sur au moins une âme de foret (35).

2. Outil de taraudage selon la revendication 1, **caractérisé en ce que** la dent de façonnage (41, 42, 43) de la section de façonnage de taraudage (29) présente une pointe de dent radialement extérieure (45) et un pied de dent radialement intérieur espacé de celle-ci d'une hauteur de dent, et **en ce que** la pointe de dent (45) se trouve sur une ligne circulaire dont le diamètre (d_{ZK}) est supérieur au diamètre de préperçage (d_{VB}) de l'arête coupante de préperçage (27), et **en ce que** le pied de dent se trouve en particulier sur une ligne circulaire dont le diamètre (d_{ZG}) est inférieur au diamètre de préperçage (d_{VB}) de l'arête coupante de préperçage (27).

3. Outil de taraudage selon la revendication 1 ou 2, **caractérisé en ce que** l'arête coupante de post-perçage (51) se trouve sur une ligne circulaire dont le diamètre (d_{NB}) est inférieur au diamètre de préperçage (d_{VB}) de l'arête coupante préperçage (27) et/ou supérieur au diamètre intérieur (d_{I}) du profil tubulaire de taraudage intérieur (8) ou supérieur au diamètre de pied de dent (d_{ZG}) et inférieur au diamètre de pointe de dent (d_{ZK}).

4. Outil de taraudage selon la revendication 1, 2 ou 3, **caractérisé en ce que** l'arête coupante de post-perçage (51), dans la course de taraudage (G), est introduite sans contrainte dans le préperçage de pièce à usiner (30) et **en ce que** l'arête coupante de post-perçage (51), dans la course inverse (R) ultérieure, alèse le profil tubulaire de taraudage intérieur (8) pour en terminer avec le taraudage intérieur (9).

5. Outil de taraudage selon la revendication 3 ou 4, **caractérisé en ce que** l'arête coupante de post-perçage (51) s'étend dans la direction axiale de l'outil entre deux coins de coupe (55, 57), et **en ce que** l'arête coupante de post-perçage (51) présente en particulier un profil d'arête incurvé radialement vers l'intérieur, grâce auquel des arêtes de surface de coupe (65) peuvent être ébavurées sur le taraudage intérieur (9).

6. Outil de perçage selon l'une quelconque des revendications précédentes, **caractérisé en ce qu'**une chambre de refoulement (59) est réalisée entre l'arête coupante de préperçage (51) et la section de façonnage de taraudage (29), dans laquelle le matériau de pièce à usiner est refoulé avec déformation plastique pendant la course de perçage (G), et **en ce que**, en particulier, un fond de chambre radialement intérieur se trouve sur une ligne circulaire dont le diamètre est inférieur au diamètre de post-perçage (d_{NB}).

7. Outil de taraudage selon l'une quelconque des revendications précédentes, **caractérisé en ce que**, dans la course de taraudage (G), la dent de façonnage (41, 42, 43) produit une griffe de façonnage (61) qui fait saillie radialement vers l'intérieur sur le sommet intérieur de taraudage (21), et **en ce que**, dans la suite de la course de taraudage (G), la griffe de façonnage (61) qui fait saillie radialement vers l'intérieur est repliée, ce qui a pour effet de recouvrir au moins partiellement la spire de taraudage (15).

8. Outil de taraudage selon la revendication 7, **caractérisé en ce que** l'opération de pliage qui a lieu dans la course de taraudage (G) est effectuée à l'aide d'une base de dent (48) qui suit la dent de façonnage (41, 42, 43) dans la direction de perçage, et/ou **en ce que**, dans l'opération de pliage, la griffe de façonnage (61) est pliée dans la direction opposée à la direction de perçage, c'est-à-dire en particulier dans la direction de prélèvement de copeaux (S).

9. Outil de perçage selon l'une quelconque des revendications précédentes, **caractérisé en ce qu'**au moins une rainure à copeaux (28) s'étend le long de la direction axiale de l'outil jusqu'à l'arête coupante de préperçage (27), et **en ce qu'**une surface de coupe (31) délimitant la rainure (28) et une surface de dégagement côté avant (33) de la pointe de foret (25) convergent sur l'arête coupante de préperçage côté avant (27), et/ou **en ce que** la rainure (28) est délimitée dans la direction circonférentielle de l'outil par l'âme de foret (35) et la surface de coupe (31) se transforme en une arête secondaire (36) sur la surface arrière circonférentielle extérieure (37) de l'âme de foret (35), et/ou **en ce que** l'arête coupante secondaire (36) et l'arête coupante de préperçage côté avant (27) convergent sur un coin d'arête coupante de préperçage radialement extérieur (39), qui repose sur le diamètre de préperçage (d_{VB}).

10. Outil de taraudage selon l'une des revendications précédentes, **caractérisé en ce que** dans la course de taraudage (G), avec une avance de taraudage (f_{G}) dans la direction de taraudage (I) et avec une vitesse de taraudage synchronisée avec celle-ci (n_{G}), l'outil de taraudage (23) peut être enfoncé dans la pièce à usiner (5), et le préperçage (30) est produit et la section de façonnage de taraudage (29) forme le profil tubulaire de taraudage intérieur (8) sur la paroi intérieure du préperçage (30), et/ou que, dans la course inverse (R), l'outil de taraudage (23) peut être retiré du trou de taraudage avec une avance inverse (f_{R}) dans une direction opposée et une vitesse de rotation inverse (n_{R}) synchronisée avec celle-ci, et/ou **en ce que** des copeaux sont générés dans la course de taraudage (G), qui peuvent être transportés hors du trou taraudé dans une direction d'évacuation de copeaux (S) opposée à la direction de taraudage (1) et heurter ainsi le flanc de taraudage (19) faisant face aux copeaux du profil tubulaire de taraudage intérieur (8), qui fait face aux copeaux à enlever, et/ou que la course de taraudage (G) n'est ensuite pas immédiatement suivie de la course inverse (R), mais d'une course de rainurage (N), dans laquelle est formée une rainure circonférentielle (13) sans pas de taraudage qui rejoint le taraudage intérieur (9), dans laquelle la section de taraudage (29) de l'outil de taraudage (23) peut tourner sans contrainte.

11. Outil de taraudage selon la revendication 10, **caractérisé en ce que** la section de taraudage (29) présente au moins une dent inverse (69) avec une arête coupante de coupe/façonnage de flanc de filet, au moyen de laquelle pendant la course inverse (R), une surépaisseur de flanc (Δₓ) du flanc de taraudage (19) faisant face aux copeaux du profilé tubulaire de taraudage intérieur (8) peut être enlevée et/ou façonnée.

12. Procédé de production d'un trou taraudé (1) dans une pièce à usiner (5) non prépercée au moyen d'un outil de taraudage selon l'une quelconque des revendications précédentes.
